# EUROPEAN PATENT APPLICATION

(11) **EP 4 792 646 A1**
(43) Date of publication of application: **19.08.2026**
(21) Application number: 26157701.9
(22) Date of filing: 10.02.2026
(51) Int. Cl.: A01K 85/01

(54) **SOUND GENERATING LURE**

(30) Priority: 10.02.2025 US 202563756449 P
(71) Applicant: Pure Fishing, Inc., Spirit Lake, IA 51360 (US)
(72) Inventor: SPENGLER, Daniel Eric, MILFORD, IA, 51351 (US); OSTRUM, Keith Lane, SPIRIT LAKE, IA, 51360 (US); LANGE, Kelli Marie, SPIRIT LAKE, IA, 51360 (US)
(74) Representative: Cabinet Beau de Loménie

(57) **Abstract**

A fishing lure (100) includes a primary lure body (106), a propeller tail (104) rotatable relative to the body (106), and a sound generating assembly (102) that generates noise or sound during rotation of the tail (104). The sound generating assembly (102) may include a sound structure (110) co-rotatable with the propeller tail (104) and a rivet (112) adjacent and distal to the sound structure (110). The sound structure (110) rotates relative to and engages the rivet (112) to generate the noise or sound. The sound structure (110) may be partially housed in a sound resonance chamber (114) that amplifies the noise or sound.

## Description

### CROSS-REFERENCE TO RELATED APPLICATION

This application claims priority to U.S. Provisional Patent Application No. 63/756,449, filed February 10, 2025, the entire contents of which are incorporated herein by reference and to which the person of the art can refer when considering the present disclosure.

### TECHNICAL FIELD

The present disclosure relates generally to fishing lures that include a sound generating assembly.

### BACKGROUND

Topwater or surface fishing lures are designed to float on the surface of water. To attract fish, a topwater fishing lure may mimic movements and/or sounds of surface-dwelling prey such as, for example, injured fish, frogs, insects, or the like. There is an ongoing need for improvements in topwater lures to attract fish to the lure.

### SUMMARY

The present disclosure provides a lure that includes a sound generating assembly. The sound generating assembly may create an amplified squeaking or screaming sound when the lure is moved in the water. The sound may be unique to topwater lures and may distinguish the lure in the water for attracting fish to the lure. The sound(s) delivered by the sound generating assembly may assist anglers in generating more strikes and catching more fish than typical surface baits. In some embodiments, the sound generating assembly may generate a range of sounds (or vibrations) that can be dependent on or influenced by lure speed and retrieval rate. The sound generating assembly may include a metal sound or "squeak" structure that rotatably engages a metal rivet to generate a defined squeak, scream, squeal or variable chirping sound. Rotation of the squeak structure can be caused via a tail propeller during movement of the lure in the water. The sound generating assembly may also include a sound resonance chamber in which the sound structure is positioned. The noise or sound generated via the engagement between the sound structure and rivet can be amplified via the sound resonance chamber.

Some embodiments provide a fishing lure that includes a primary lure body, a wire form, a sound structure, and a rivet. The wire form is connected to the primary lure body. The sound structure is rotatably supported by the wire form. The rivet is non-rotatably connected to the wire form. The sound structure rotatably engages the rivet to generate sound.

In some embodiments, the primary lure body defines a longitudinal axis, the wire form is pivotable relative to the primary lure body about a pivot axis, and the pivot axis is transverse to the longitudinal axis.

In some embodiments, the sound structure has a protrusion, and the protrusion rotatably engages the rivet to generate sound.

In some embodiments, the rivet defines a contoured engagement surface, and the protrusion engages the contoured engagement surface.

In some embodiments, the contoured engagement surface includes a series of concentric grooves.

In some embodiments, the rivet has a serrated circumferential edge, and the protrusion engages the serrated circumferential edge.

In some embodiments, the wire form is anchored to the primary lure body such that the primary lure body provides a reaction force to the rivet to prevent the rivet from rotating with the sound structure.

In some embodiments, the primary lure body includes a weight, and the weight provides a gravitational reaction force to the primary lure body to prevent the primary lure body from rotating in a body of water.

In some embodiments, the sound structure is mounted to a propeller tail, and the propeller tail is rotatably supported by the wire form.

In some embodiments, the sound structure is fixed to the propeller tail such that the sound structure and the propeller tail are co-rotatable about the wire form.

In some embodiments, the sound structure is mounted in a sound resonance housing of the propeller tail.

In some embodiments, a blade extends radially outwardly from the sound resonance housing.

In some embodiments, the propeller tail includes a removable core pin.

In some embodiments, the sound structure extends axially outwardly beyond the propeller tail.

In some embodiments, the sound structure is axially slidable along the wire form.

Some embodiments provide a fishing lure that includes a wire form, a primary lure body, a rivet, and a sound structure. The wire form is anchored to the primary lure body. The rivet is anchored to the wire form. The sound structure is rotatably supported along the wire form between the primary lure body and the rivet. The sound structure is configured to generate sound when rotatably engaging the rivet.

In some embodiments, the rivet has one or more of a contoured engagement surface and a serrated circumferential edge, and the sound structure contacts one or more of the contoured engagement surfaces and the serrated circumferential edge to generate sound.

In some embodiments, the sound structure is mounted in a propeller tail.

Some embodiments provide a fishing lure that includes a sound generating assembly, a wire form, and a primary lure body. The sound generating assembly includes a sound structure and a rivet. The sound structure is rotatable relative to the rivet to generate sound. The wire form extends through the sound structure and the rivet. The primary lure body is connected to the wire form.

In some embodiments, the sound structure is mounted in a propeller tail.

The following description and the appended figures set forth certain features for purposes of illustration. Advantages will become more apparent when reading the present disclosure in its entirety.

### BRIEF DESCRIPTION OF THE DRAWINGS

So that the manner where the above recited features may be understood in detail, a more particular description, briefly summarized above, may be had by reference to example aspects, some of which are illustrated in the appended drawings.
FIG. 1 is a perspective view of an example fishing lure including a sound generating assembly;
FIG. 2 is another perspective view of the fishing lure of FIG. 1, showing a tail assembly deviated relative to a longitudinal axis of a primary lure body;
FIG. 3 illustrates the fishing lure of FIG. 1 partially disassembled showing internal features of the primary lure body;
FIG. 4 is an enlarged side view of the tail assembly of the fishing lure of FIGS. 1-3;
FIG. 5 is a cross-sectional view of the tail assembly of FIG. 4 and a tail end of the fishing lure of FIGS. 1-3;
FIG. 6 is an exploded view of the tail assembly of FIG. 4;
FIG. 7 is another exploded view of a portion of the tail assembly of FIG. 4;
FIG. 8 is an assembled view of the portion of the tail assembly of FIG. 7;
FIG. 9 illustrates a first example sound structure and a first example rivet of the sound generating assembly of FIG. 1;
FIG. 10 is a perspective view of a second face of the first example sound structure of FIG. 9;
FIG. 11 is a perspective view of a second face of a second example sound structure useable in the sound generating assembly of FIG. 1 in place of the first example sound structure of FIG. 9;
FIG. 12 is a side elevation of the second example sound structure of FIG. 11;
FIG. 13 illustrates a first face of the second example sound structure of FIG. 11;
FIG. 14 is a side elevation of the first example rivet of FIG. 9;
FIG. 15 shows an engagement surface of the first example rivet of FIG. 9;
FIGS. 16-25 illustrate alternative examples of sound structures useable in the sound generating assembly of FIG. 1 in place of the first example sound structure of FIG. 9;
FIGS. 26-28 illustrate alternative examples of rivets useable in the sound generating assembly of FIG. 1 in place of the first example rivet of FIG. 9.

Corresponding reference numbers in the drawings indicate corresponding parts.

### DETAILED DESCRIPTION

One or more specific embodiments of the present disclosure will be described herein. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

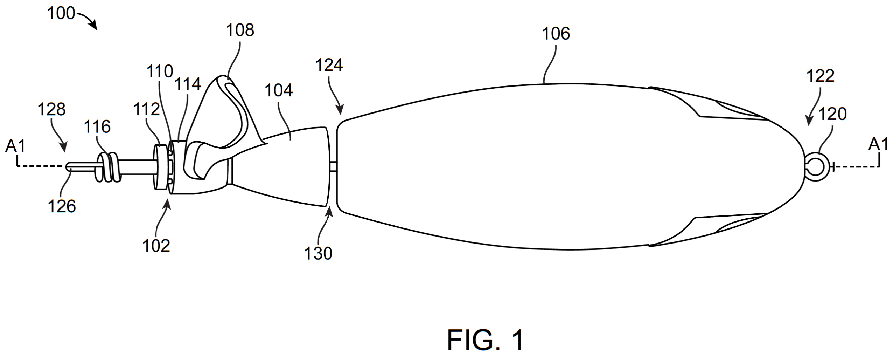

FIG. 1 depicts a fishing lure 100 that may be used, for example, in topwater or surface fishing applications. The lure 100 may include a sound generating assembly 102 that may be operably coupled with a propeller tail 104 of the lure 100. The propeller tail 104 may rotate about a rotational axis A1 relative to a primary body 106 of the lure 100 via at least one blade 108 during movement of the lure 100 in the body of water. Rotation of the propeller tail 104 may cause the sound generating assembly 102 to generate noise or sound via rotational engagement between a first example sound structure 110 and a first example rivet 112. The generated noise or sound may be amplified via a sound resonance housing 114 that at least partially surrounds the sound structure 110. In some embodiments, the noise or sound generated by the sound generating assembly 102 may be a defined squeak, squeal, scream, and/or variable chirping sound, which can operate to attract fish to the lure 100. In this way, the fishing lure 100 can be used to assist anglers in generating more strikes and catching more fish than conventional lures. The sound generating assembly 102 may cooperate with the rotating tail 104 to mimic sound and movement of prey that can further facilitate attraction of fish to the lure 100. In some embodiments, the noise or sound generated via the sound generating assembly 102 may vary depending on the rotational speed of the propeller tail 104, which in turn may depend on the speed and/or retrieval rate of the lure 100 in the body of water. The variation in the noise or sound generated via the sound generating assembly 102 may increase the versatility of the lure 100.

The lure 100 may include a wire form 116 connected to the primary body 106. The wire form 116 may extend distally from the primary body 106. The propeller tail 104 and the sound generating assembly 102 may be positioned on the wire form 116. More specifically, the wire form 116 extends through the propeller tail 104 and the sound generating assembly 102. The propeller tail 104, the at least one blade 108, the sound structure 110, and the sound resonance housing 114 may freely rotate in unison around the wire form 116 about the rotational axis A1. In some embodiments, the at least one blade 108 and/or the sound resonance housing 114 may be integrated and co-rotatable with the propeller tail 104. In some embodiments, the at least one blade 108 and/or the sound resonance housing 114 may be coupled with the propeller tail 104 to co-rotate with the propeller tail 104. The sound structure 110 may be fixedly housed in the sound resonance housing 114. In some embodiments, the sound structure 110 may be integrated in the sound resonance housing 114. The rivet 112 may be secured, e.g., crimped, on the wire form 116 such that the sound structure 110 can rotate relative to the rivet 112. In some embodiments, the rivet 112 may be integrated with the wire form 116. More specifically, the rivet 112 is non-rotatably fixed to the wire form 116. Thus, the wire form 116 provides a reaction force to the rivet 112, which prevents the rivet 112 from rotating with the propeller tail 104 about the rotational axis A1. Consequently, the sound structure 110, which is non-rotatably fixed in the propeller tail 104, suitably may rotate relative to the rivet 112 such that the sound structure 110 rotatably engages the rivet 112 to generate the noise or sound.

The lure 100 may include eyelets 120, 126 that couple the lure 100 to hooks and/or a fishing line. In this example, the primary lure body 106 may include a head eyelet 120 at a head end 122 of the body. The head eyelet 120 may be anchored or fixed to, or integrated with, the primary lure body 106. The head eyelet 120 may tie to a fishing line or may couple to a hook. The head end 122 may be opposite a tail end 124 of the primary lure body 106. The wire form 116 may be anchored or fixed to the primary lure body 106 at the tail end 124, thus providing a reaction force to prevent the wire form 116 from rotating relative to the primary lure body 106 about the rotational axis A1. Consequently, the propeller tail 104 rotates relative to the primary lure body 106, the wire form 116, and the rivet 112. The wire form 116 may extend distally from the tail end 124. A tail eyelet 126 may be defined by, integrated with, or connected to the wire form 116 at a distal end 128 of the lure 100. The tail eyelet 126 may couple to a hook.

A gap 130 may exist between the propeller tail 104 and the tail end 124 of the primary lure body 106. In some embodiments, the propeller tail 104 may move or slide axially, relative to the rotational axis A1, along the wire form 116. Movement or sliding of the propeller tail 104 may change a size or dimension of the gap 130. In some embodiments, the axial position of the propeller tail 104 on the wire form 116 may be fixed such that the size or dimension of the gap 130 is also fixed.

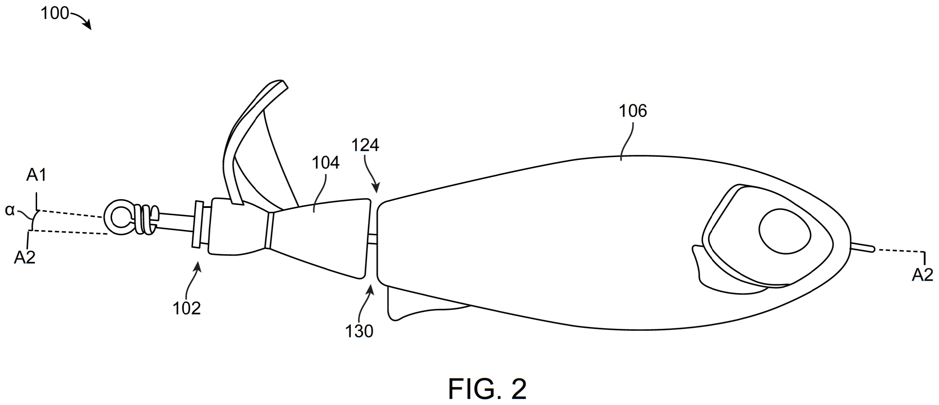

Referring to FIG. 2, the wire form 116 may move, e.g., pivot or swing, relative to the primary lure body 106. Movement of the wire form 116 may be allowed via the gap 130. In some embodiments, the wire form 116 may swing or pivot transverse to a longitudinal axis A2 of the primary lure body 106. Movement of the wire form 116 relative to the longitudinal axis A2 may cause the rotational axis A1 of the propeller tail 104 to align with or deviate from the longitudinal axis A2. For example, the wire form 116 may swing or pivot between a position in which the axes A1, A2 are aligned and a position in which the rotational axis A1 deviates from the longitudinal axis A2. The wire form 116 may move to a position where the rotational axis A1 deviates from the longitudinal axis A2 at an angle α. In some embodiments, the angle α may range from approximate zero to approximately 10 degrees, or from approximately zero to approximately 5 degrees.

The movement of the wire form 116 and the propeller tail 104 positioned on the wire form 116 relative to the primary lure body 106 may allow the lure 100 to mimic movement of prey to attract fish to the lure 100. The movement of the wire form 116 may also be independent of the rotation of the propeller tail 104. In this way, the propeller tail 104 may rotate to cause the sound generating assembly 102 to generate noise or sound and the wire form 116 may move irrespective of the rotation.

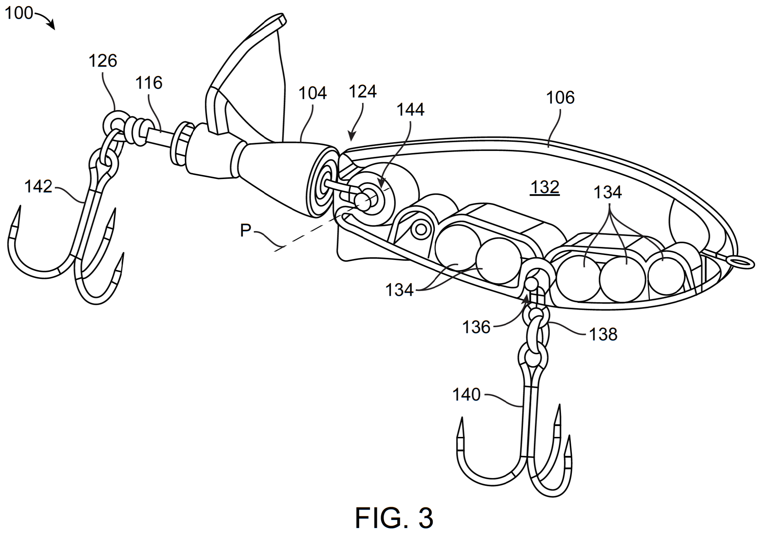

Referring to FIG. 3, the primary lure body 106 may include a hollow interior 132 that allows the lure 100 to float at a top surface of the body of water. Weights 134, e.g., lead balls, may be positioned within the hollow interior 132 proximate a bottom of the primary lure body 106. The weights 134 may stabilize and orient the lure 100, namely the primary lure body 106, relative to the surface of the body of water. Consequently, the weights 134 provide a gravitational reaction force prevent the primary lure body 106 from rotating freely in the body of water about the longitudinal axis A2 (shown in FIG.2). The primary lure body 106 also includes a first or bottom joint 136 at the bottom. The bottom joint 136 may allow a bottom eyelet 138 to couple to the primary lure body 106. The bottom eyelet 138 may be coupled to a bottom hook 140, e.g., via a coupling ring. The bottom eyelet 138 may swing or pivot in the bottom joint 136. In some embodiments, the bottom eyelet 138 may be fixed or anchored relative to the primary lure body 106. A tail hook 142 may be coupled to the tail eyelet 126, e.g., via a coupling ring.

The primary lure body 106 may include a second or tail joint 144 proximate the tail end 124. A proximal end of the wire form 116 may be positioned in the tail joint 144. The wire form 116 may be moveable within the tail joint 144 about a pivot axis P to allow the movement, e.g., swinging or pivoting, of the wire form 116 and the propeller tail 104 relative to the primary lure body 106 described above with respect to FIG. 2. In some embodiments, the pivot axis P is transverse to the longitudinal axis A2.

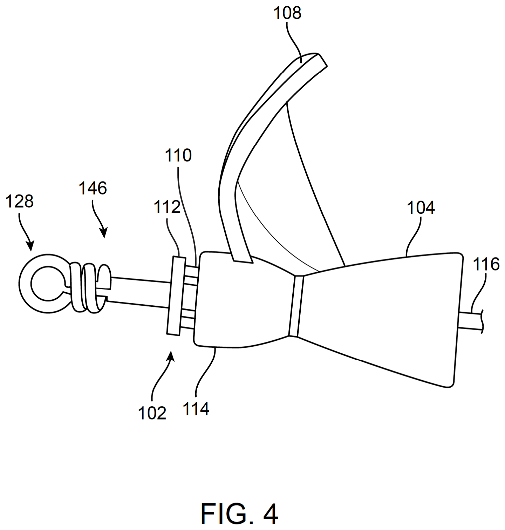

Referring to FIG. 4, a tail assembly 146 of the lure 100 includes the sound generating assembly 102 and the propeller tail 104 and, as such, the tail assembly 146 may be positioned on the wire form 116. In this example, the propeller tail 104, the at least one blade 108, and the sound resonance housing 114 may be integrated as a one-piece unit. For example, the propeller tail 104, the at least one blade 108, and the sound resonance housing 114 may be integrally formed via molding. In some examples, the sound resonance housing 114 and/or the blade 108 may be separate from and coupled to the propeller tail 104.

The at least one blade 108 may include a single blade or multiple blades. The at least one blade 108 may be configured (e.g., sized, shaped, and/or pitched) to guide rotation of the propeller tail 104 and the sound resonance housing 114 as the lure 100 moves through or along the top surface of the body of water. For example, as the lure 100 drifts or is retrieved, the water may exert a force on the blade 108 that is translated to rotation of the propeller tail 104 and the sound resonance housing 114.

The sound resonance housing 114 may be positioned distal relative to the propeller tail 104 and the sound resonance housing 114 may face the distal end 128 of the lure 100. The sound structure 110 may be housed by and co-rotatable with the sound resonance housing 114. The sound structure 110 may partially protrude beyond the sound resonance housing 114 towards the distal end 128. The sound structure 110 may be positioned between the sound resonance housing 114 and the rivet 112. The rivet 112 may be secured, e.g., crimped, on the wire form 116 between the sound structure 110 and the distal end 128. The portion of the sound structure 110 protruding beyond the sound resonance housing 114 may rotatably engage the rivet 112 to generate the noise or sound. The noise or sound may then travel into the sound resonance housing 114 where it can be amplified.

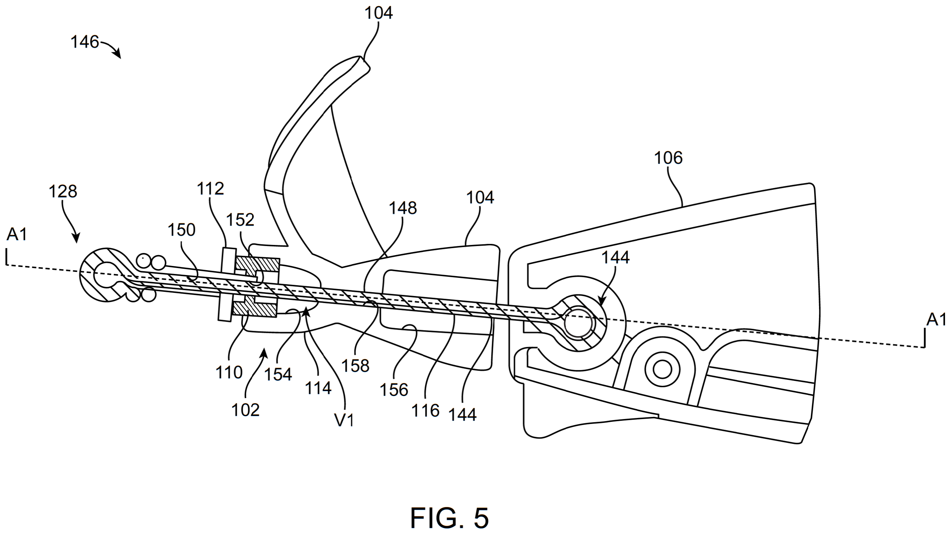

Referring to FIG. 5, the wire form 116 may extend through the tail assembly 146 between the distal end 128 and the tail joint 144 of the primary lure body 106. The propeller tail 104 and the sound generating assembly 102 may cooperatively define a central passage 148 through which the wire form 116 extends along the rotational axis A1. For example, the central passage 148 may be cooperatively defined by a central bore 150 in the rivet 112, a central hole 152 in the sound structure 110, a sound resonance chamber 154 in the sound resonance housing 114, an open core 156 of the propeller tail 104, and a through hole 158 that connects the sound resonance chamber 154 and the open core 156. The central bore 150, the central hole 152, the sound resonance chamber 154, the open core 156, and the through hole 158 may be co-axially aligned along the rotational axis A1.

The sound structure 110 may be partially housed or seated in the sound resonance chamber 154. An open volume V1 of the sound resonance chamber 154 is adjacent to the sound structure 110. The noise or sound generated via the sound structure 110 and the rivet 112 can travel into the open volume V1 and be amplified therein. The open volume V1 may be proximal to the sound structure 110 and located between the sound structure 110 and the through hole 158.

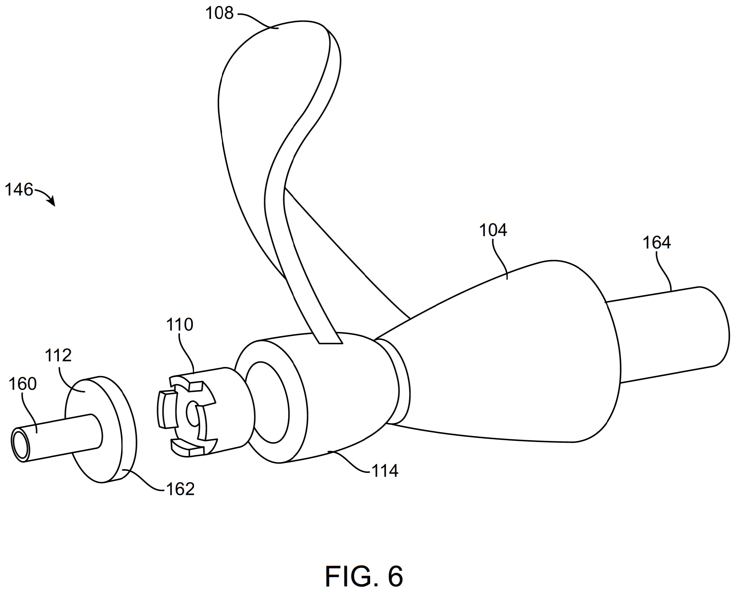

Referring to FIG. 6, the rivet 112 may include a rivet tail 160 and a rivet head 162. The tail 160 may extend distally from the rivet head 162. The rivet head 162 may face the sound structure 110 and the sound resonance chamber 154 of the sound resonance housing 114. The rivet tail 160 may be secured, e.g., crimped, on the wire form 116 described above with reference to FIGS. 1 and 4, for example.

As described above, the propeller tail 104, the at least one blade 108, and the sound resonance housing 114 may be formed integrally as a one-piece unit. One or more temporary or removable core pins 164 may be used during the formation process, e.g., molding, to provide internal portions of the propeller tail 104 and/or the sound resonance housing 114 that may partially form the central passage 148 described with respect to FIG. 5. Suitably, the interior portions of the propeller tail 104 and the sound resonance housing 114 that define a part of the central passage allow the tail and the housing to freely rotate about the wire form 116 (shown in FIG. 5).

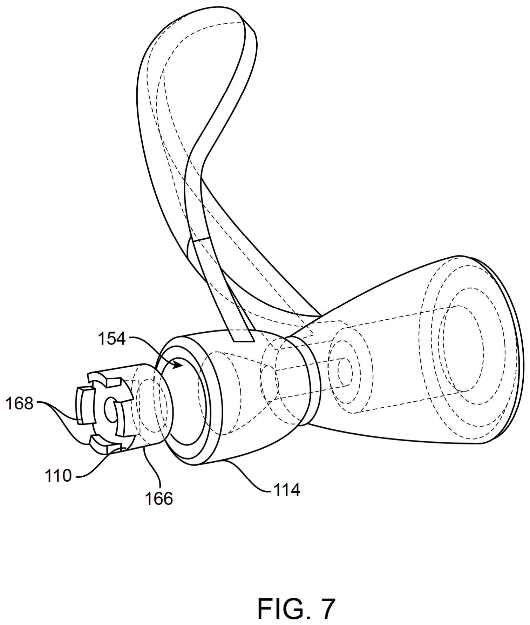

Referring to FIG. 7, the sound structure 110 may include a base 166 that is generally cylindrical and one or more protrusions 168 extending axially outwardly from the base 166. The protrusions 168 may include teeth, tines, bumps, walls, ridges, or any other protruding structures. The protrusions 168 may include one protrusion or multiple discrete protrusions. The base 166 may be received by the sound resonance chamber 154 of the housing 114.

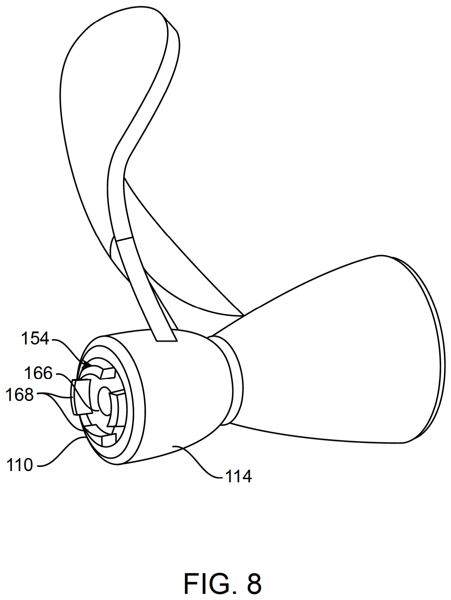

Referring to FIG. 8, when the base 166 of the sound structure 110 is positioned in the sound resonance chamber 154 of the housing 114, the protrusions 168 may extend distally beyond the sound resonance chamber 154 for engaging the rivet head 162 described above with reference to FIG. 6. In some embodiments, the sound structure 110 may be secured within the sound resonance housing 114 using a suitable attachment means. For example, the sound structure 110 may be secured within the sound resonance housing 114 via heat staking and/or sonic welding. Additionally or alternatively, the sound structure 110 may be secured within and/or to the sound resonance housing 114 using any suitable means, such as fasteners, welding, heat staking, adhesive, etc. In some embodiments, the sound structure 110 may be integrated with the sound resonance housing 114.

Example sound structures and example rivets (e.g., the first example sound structure 110 and the first example rivet 112) will now be described in more detail. Many variations and/or example of sound structures and rivets can exist, some of which may be described below. Any variation and/or example of sound structure can be used in any combination with any variation and/or example of rivet. Any particular combination of features of example sound structures and features of example rivets specifically shown or described is not intended to limit those features to being used only in that particular combination.

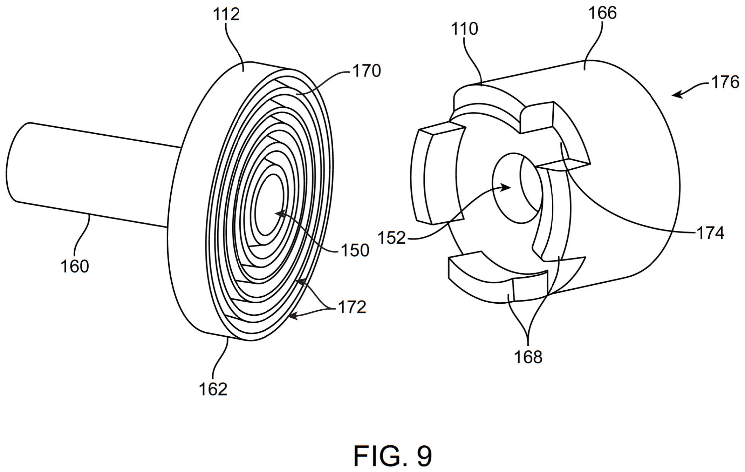

FIG. 9 depicts the first example sound structure 110 and the first example rivet 112 of the sound generating assembly 102. The sound structure 110 and the rivet 112 may each be made of a metal material, such as aluminum, stainless steel, and/or brass. The sound structure 110 and the rivet 112 may be made of similar materials in some examples. For example, each of the sound structure 110 and the rivet 112 may be made of aluminum or stainless steel. In some embodiments, the sound structure 110 and the rivet 112 may be made of dissimilar materials, such as dissimilar metal materials. The sound structure 110 and/or the rivet 112 may have an anodized or a non-anodized surface finish. In certain embodiments, the sound structure 110 and the rivet 112 may each be made of aluminum and may have an anodized or non-anodized surface finish.

The rivet head 162 may define an engagement surface 170 that faces the protrusions 168 of the sound structure 110. The central bore 150 may be defined in the engagement surface 170 and extend through the rivet tail 160. The protrusions 168 may rotatably engage the engagement surface 170 to generate the sound or noise. In some embodiments, the engagement surface 170 may be contoured for generating the sound or noise when engaged by the protrusions. In this example, the engagement surface 170 may be grooved or ribbed. For example, the engagement surface 170 may include a series of concentric, circular grooves 172 arranged radially outwardly from one another. The dimensions, e.g., depth and/or radial width, and the number of grooves 172 may vary and could be configured for generating the desired noise or sound when engaged by the protrusions. In this example, the engagement surface 170 may include five concentric grooves 172. The engagement surface 170 may have other contours, e.g., other ribbed or grooved configurations, in other examples that can enable the engagement surface to cooperate with the protrusions 168 for generating noise or sound.

The rivet head 162 may be disk-shaped in this example. In some embodiments, the rivet head 162 may have any suitable shape that enables the rivet head to function as described. The base 166 of the sound structure 110 may be cylindrical in this example. In some embodiments, the sound structure 110 may have any suitable shape that enables the sound structure to function as described.

The base 166 of the sound structure 110 may include a first face 174 that faces the engagement surface 170 of the rivet head 162. The central hole 152 may be defined in the first face 174 and extend through a second face 176 of the base 166 opposite the first face. The protrusions 168 may extend from the first face 174 towards the engagement surface 170 of the rivet head 162. The protrusions 168 may be positioned at discrete angular positions in a circumferential arrangement along a periphery of the first face 174. In some embodiments, the protrusions 168 are spaced evenly from one another. In some embodiments, the protrusions 168 may have any suitable positioning or arrangement on the first face to enable the sound structure to function as described.

The protrusions 168 can be configured (e.g., sized, shaped, arranged, positioned, etc.) to generate the desired noise or sound during rotatable engagement with the engagement surface 170. In this example, the protrusions 168 may include discrete, arcuate teeth or tooth structures arranged circumferentially along the periphery of the first face 174. The teeth may be spaced apart from one another at uniform or variable circumferential distances. The teeth may include sharp or angular edges and/or may have rounded surfaces. The size, shape, arrangement, and/or positioning of the teeth or other protrusions can vary depending on the desired noise or sound generated by the sound structure 110.

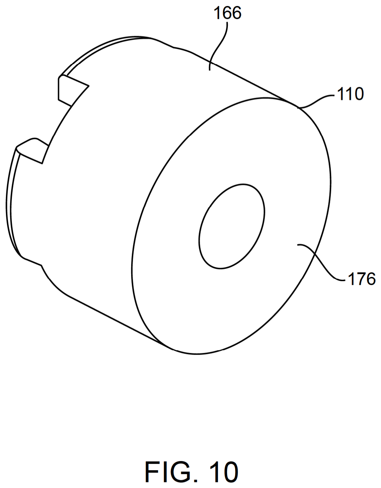

Referring to FIG. 10, the second face 176 of the base 166 of the sound structure 110 may be substantially solid except for the central hole 152 defined therein. In some embodiments, the second face 176 may be partially hollow and/or may include one or more recesses, cavities, etc. defined therein in addition to the central hole 152.

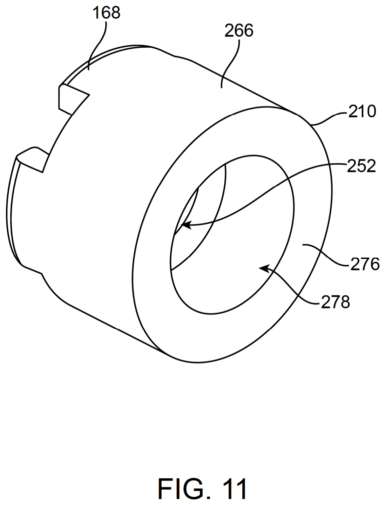

Referring to FIG. 11, in some embodiments, a second example sound structure 210 includes a base 266 that is generally cylindrical and the protrusions 168 extending axially from the base 266. In some embodiments, a second face 276 of the base 266 may define a central cavity 278 surrounding a central hole 252.

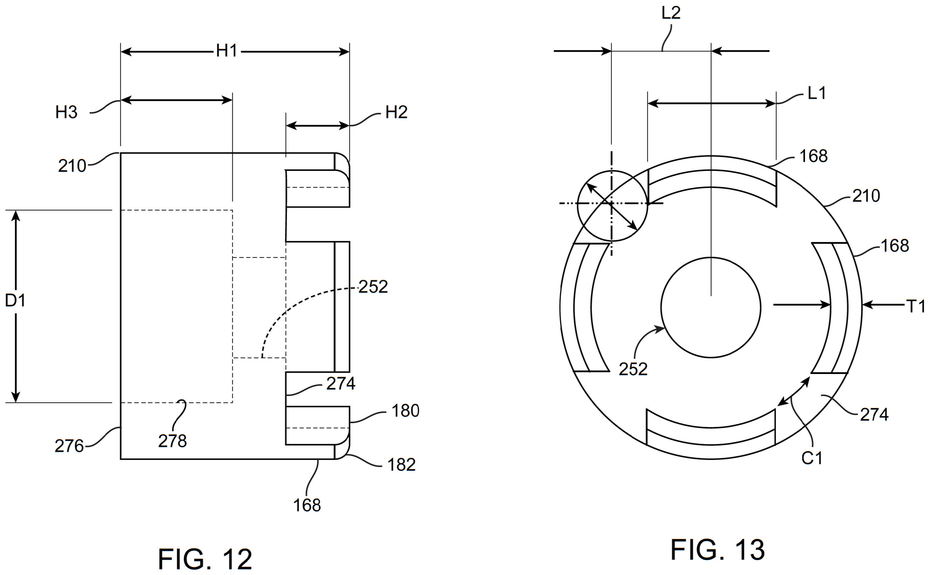

FIGS. 12 and 13 depict dimensions of the sound structure 210. One, some, or all the dimensions could be varied for generating the desired noise or sound. Referring to FIG. 12, the sound structure 210 may have a total height H1 between the second face 276 and an outer edge 180 of the protrusions 168. The protrusions 168, e.g., teeth, may have a height H2 between a first face 274 and the outer edges 180. The heights H2 of the protrusions 168 may be approximately equal such that the protrusions have substantially the same height. The heights H2 may each be shorter than the height H1. For example, the heights H2 may be shorter than one-half of the height H1 in some embodiments. The outer edges 180 may be formed with an edge feature 182 that affects the sound or noise generated by the protrusions 168. For example, the edge features 182 could be a rounded edge, an angular edge, a chamfer, etc. In some embodiments, the edge features 182 may vary between the outer edges 180.

The cavity 278 in the second face 276, if included, may be dimensioned for communicating sound or noise with the sound resonance chamber 154 (shown in FIG. 7). For example, the cavity 278 may have an inner dimension D1, such as an inner diameter. The inner dimension D1 may be larger than an inner dimension of the central hole 252. The cavity 278 may also have a height H3. The height H3 may be shorter than the height H1 and taller than the heights H2 of the protrusions 168 in some embodiments. Circumferential ends of the protrusions 168 may be spaced a circumferential distance C1 from the circumferential ends of the adjacent protrusions 168. The circumferential distances C1 may be the same or may differ between adjacent protrusions 168.

Referring to FIG. 13, the protrusions 168, e.g., teeth, may each extend an arc length L1. The arc lengths L1 may be the same or may differ between the protrusions 168. The protrusions 168 may each have a radial thickness T1. The thicknesses T1 may be the same or may differ between the protrusions 168. The thicknesses T1 may define a radial length L2 between the center of the central hole 252 and the protrusions 168. The radial lengths L2, like the thicknesses, may be the same or may differ.

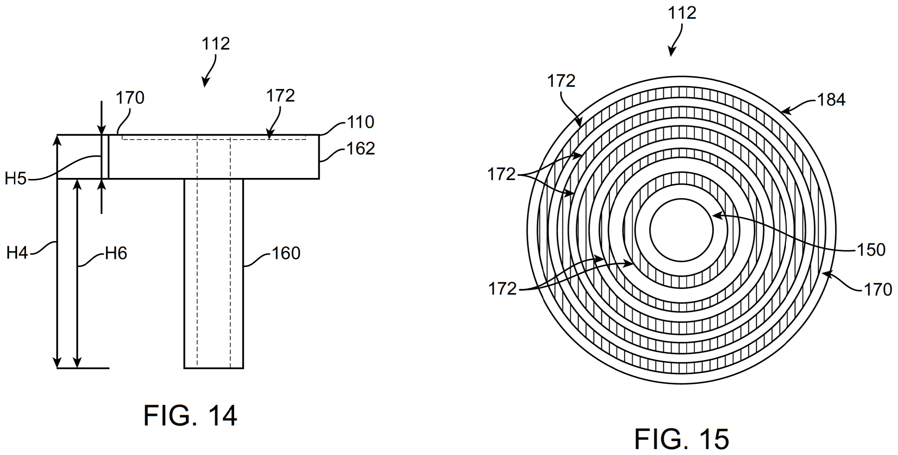

FIGS. 14 and 15 depict dimensions of the first example rivet 112. One, some, or all the dimensions could be varied for generating the desired noise or sound. The rivet 112 may have a total height H4. The rivet head 162 may have a height H5 that is shorter than the height H4. The rivet tail 160 may have a height H6 that is shorter than the height H4 and taller than the height H5. The grooves 172 may depend into the engagement surface 170 a depth that is less than the height H5. The grooves 172 may have the same depth or the depths may vary between the grooves 172.

Referring to FIG. 15, the engagement surface 170 may include the grooves 172 concentrically aligned with one another and the central bore 150. The grooves 172 may be arranged at radial intervals between the central bore 150 and a circumferential edge 184 of the rivet head 162. The radial intervals may be the same or may differ between the grooves 172. The grooves 172 may have the same radial thickness or a radial thickness may vary between the grooves.

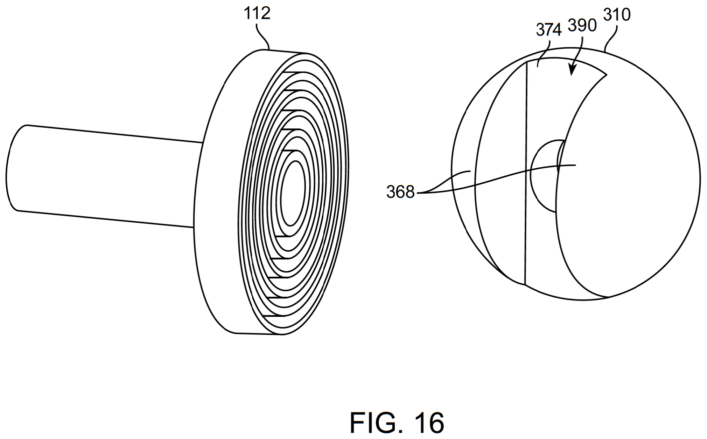

FIGS. 16-25 depict various examples of protrusions 368, 468, 568, 668, 768, 868, 968, 1068, 1168, 1268 that could be included on first faces 174, 374, 474, 574, 674, 774, 874, 974, 1074, 1174, 1274 of example sound structures 310, 410, 510, 610, 710, 810, 910, 1010, 1110, 1210. The protrusions 168 may include one protrusion or multiple, discrete protrusions. The size, shape, position, arrangement, and other configuration of the protrusions may vary depending on the desired sound or noise to be generated. Although the sound structures 310, 410, 510, 610, 710, 810, 910, 1010, 1110, 1210 of FIGS. 16-25 are shown in combination with a grooved or ribbed first example rivet 112, the sound structures 310, 410, 510, 610, 710, 810, 910, 1010, 1110, 1210 could be used in combination with other variations of the rivet including those described herein.

For example, as shown in FIG. 16, the protrusions 368 are partially hemispherical and are spaced from one another to define a rectilinear transverse channel 390.

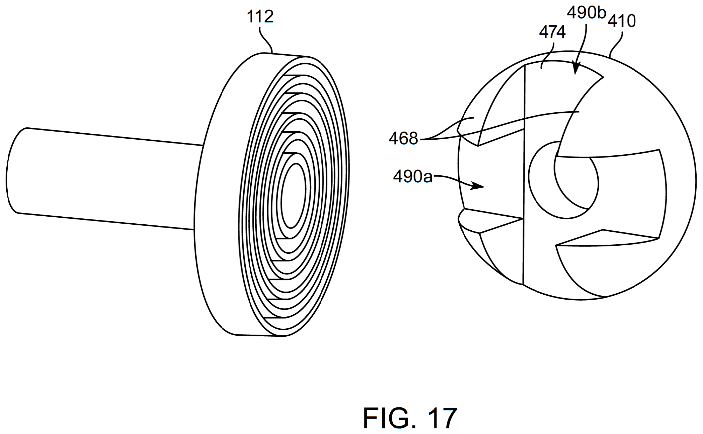

For example, as shown in FIG. 17, the protrusions 468 are pointed, partially hemispherical, and spaced from one another to define intersecting first and second rectilinear transverse channels 490a, b.

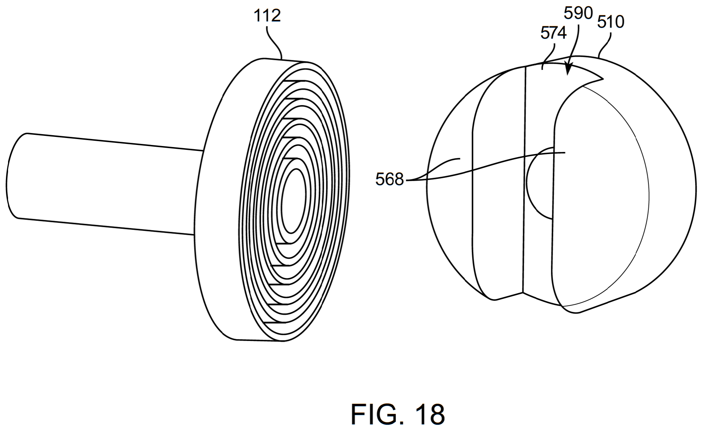

For example, as shown in FIG. 18, the protrusions 568 are plateau-shaped and spaced from one another to define a rectilinear transverse channel 590.

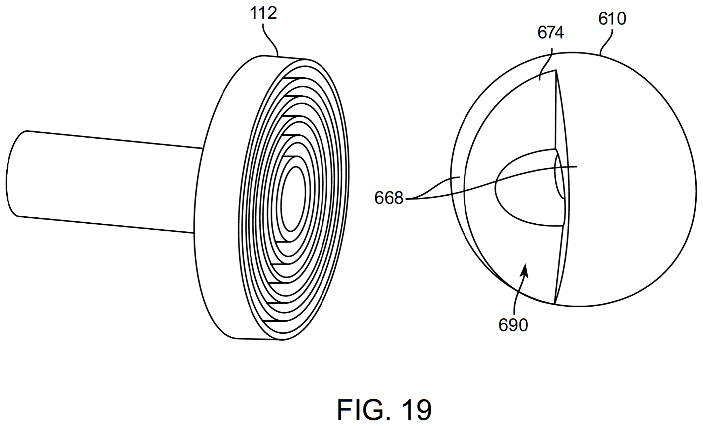

For example, as shown in FIG. 19, the protrusions 668 are partially hemispherical and connect with one another to define a transverse valley 690.

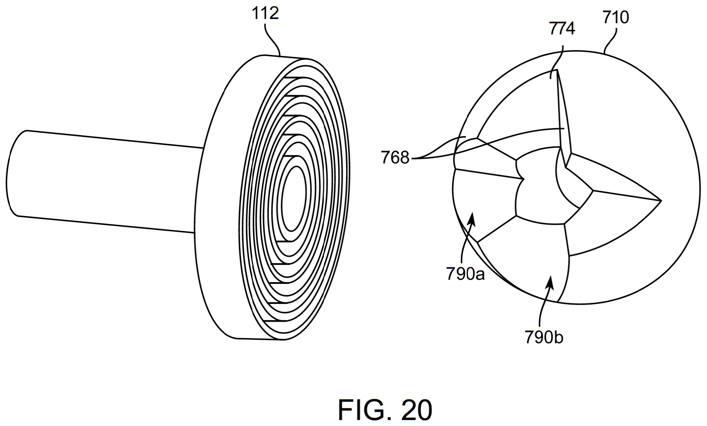

For example, as shown in FIG. 20, the protrusions 768 are partially hemispherical, pointed, and connect with one another to define first and second transverse valleys 790a, b.

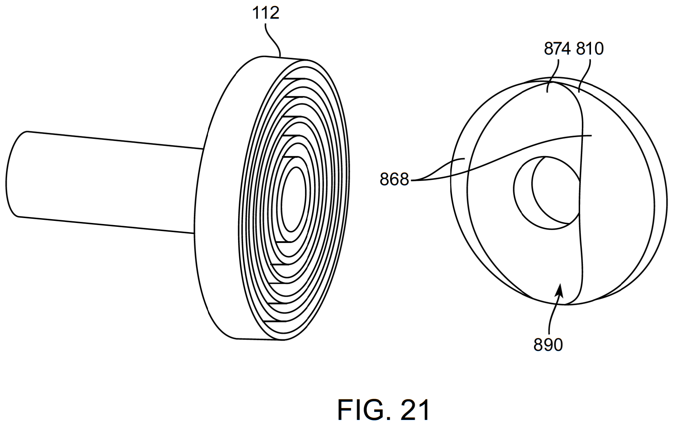

For example, as shown in FIG. 21, the protrusions 868 are partially hemispherical and connect with one another to define a curved transverse channel 890.

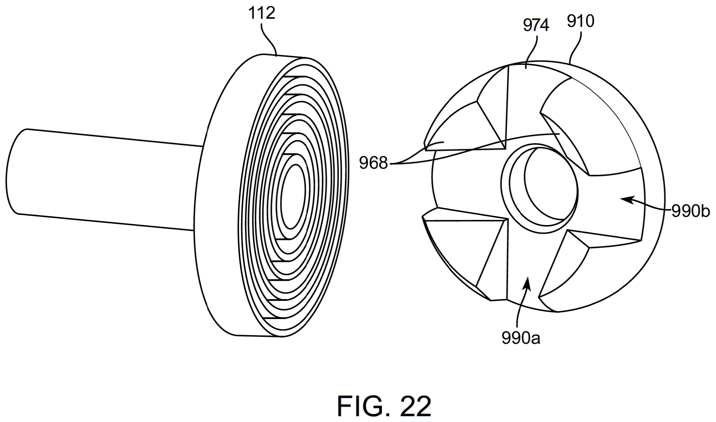

For example, as shown in FIG. 22, the protrusions 968 are partially hemispherical, inwardly ramped, and spaced from one another to define intersecting first and second rectilinear transverse channels 990a, b.

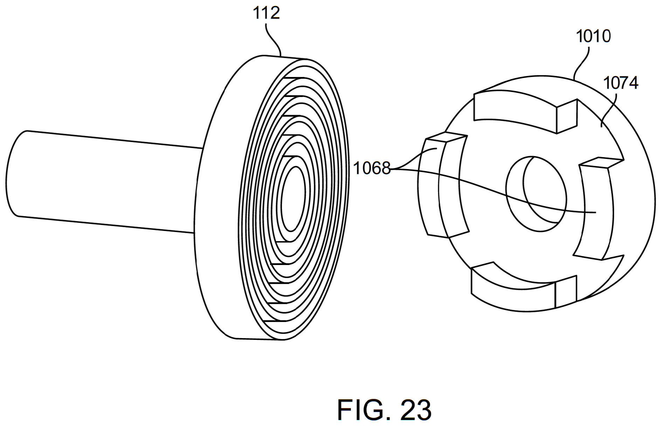

For example, as shown in FIG. 23, the protrusions 1068 are castellated.

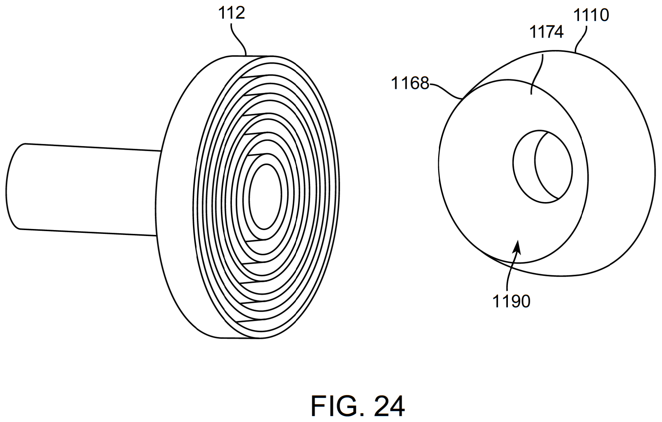

For example, as shown in FIG. 24, the protrusion 1168 is partially hemispherical and defines a central curved recess 1190.

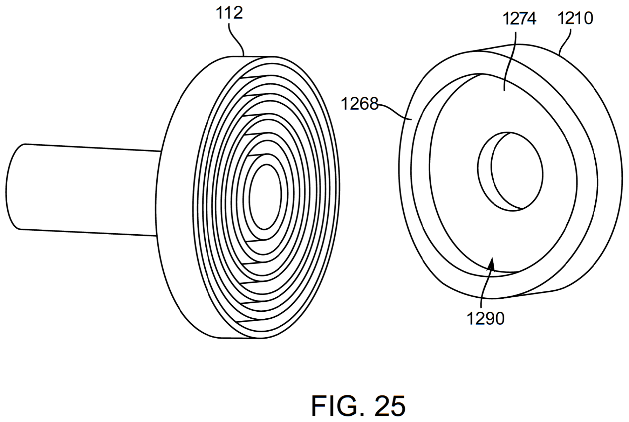

For example, as shown in FIG. 25, the protrusion 1268 is generally cylindrical and defines a central straight-sided cavity 1290.

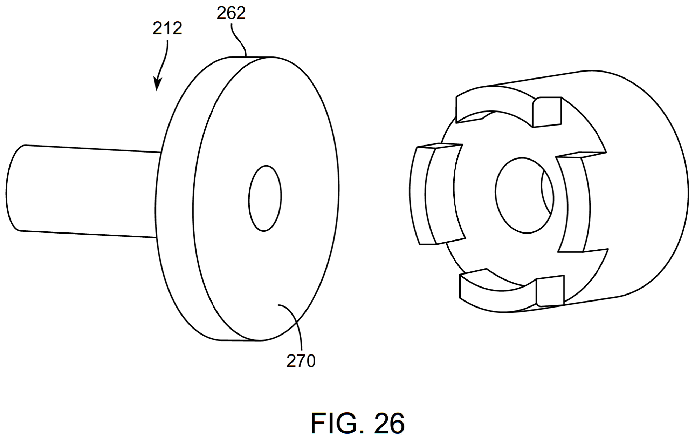

Referring to FIG. 26, a second example rivet 212 includes a rivet head 262. In some embodiments, an engagement surface 270 of the rivet head 262 may include another contour other than ribbed or grooved. For example, the engagement surface 270 may be substantially smooth.

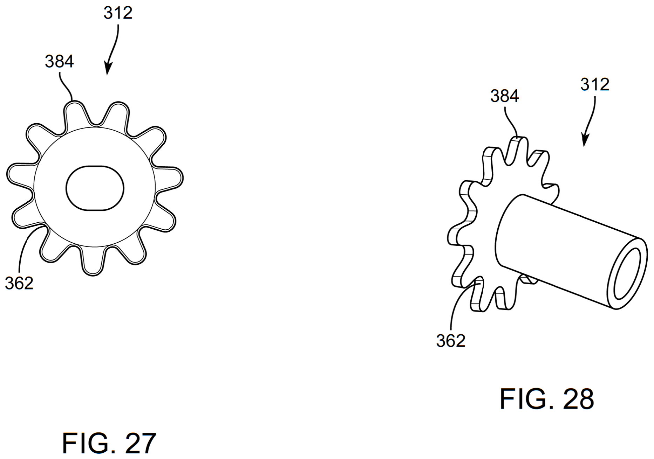

Referring to FIGS. 27 and 28, a third example rivet 312 includes a rivet head 362. A circumferential edge 384 of the rivet head 362 may be serrated in some embodiments.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, references to "one embodiment" or "an embodiment" of the present disclosure are not intended to be interpreted as excluding the existence of additional embodiments that also incorporate the recited features.

Unless specified or limited otherwise, the terms "mounted," "connected," "supported," and "coupled" and variations thereof are used broadly and encompass both direct and indirect mountings, connections, supports, and couplings.

All documents described herein are incorporated by reference herein and to which the person of the art can refer when considering the present disclosure, including any priority documents and or testing procedures to the extent they are not inconsistent with this text. As is apparent from the foregoing general description and the specific embodiments, while forms of the present disclosure have been illustrated and described, various modifications can be made without departing from the spirit and scope of the present disclosure. Accordingly, it is not intended that the present disclosure be limited thereby.

As used herein, the term "comprising" is considered synonymous with the term "including". Whenever a composition, an element or a group of elements is preceded with the transitional phrase "comprising," it is understood that the transitional phrases "consisting essentially of," "consisting of," "selected from the group of consisting of," or "is" can additionally or alternatively precede the recitation of the composition, element, or elements and vice versa.

The specific embodiments described herein have been illustrated by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical.

While the present disclosure has been described with respect to a number of embodiments and examples, those skilled in the art, having benefit of this disclosure, will appreciate that other embodiments can be devised which do not depart from the scope and spirit of the present disclosure.

## Claims

1. A fishing lure (100), comprising:
a primary lure body (106);
a wire form (116) connected to the primary lure body (106);
a sound structure (110) rotatably supported by the wire form (116); and
a rivet (112) non-rotatably connected to the wire form (116), wherein the sound structure
(110) rotatably engages the rivet (112) to generate sound.

2. The fishing lure (100) of claim 1, wherein
the primary lure body (106) defines a longitudinal axis (A2),
the wire form (116) is pivotable relative to the primary lure body (106) about a pivot axis (A1), and
the pivot axis (A1) is transverse to the longitudinal axis (A2).

3. The fishing lure (100) of claim 1 or 2, wherein
the sound structure (110) has a protrusion (168), and
the protrusion (168) rotatably engages the rivet (112) to generate sound.

4. The fishing lure (100) of claim 3, wherein
the rivet (112) defines a contoured engagement surface (170), and
the protrusion (168) engages the contoured engagement surface (170), preferably wherein
the contoured engagement surface (170) includes a series of concentric grooves (172).

5. The fishing lure (100) of claim 3, wherein
the rivet (312) has a serrated circumferential edge (384), and
the protrusion (168) engages the serrated circumferential edge (384).

6. The fishing lure (100) of any one of claims 1 to 5, wherein the wire form (116) is anchored to the primary lure body (106) such that the primary lure body (106) provides a reaction force to the rivet (112) to prevent the rivet (112) from rotating with the sound structure (110).

7. The fishing lure (100) of claim 6, wherein
the primary lure body (106) includes a weight (134), and
the weight (134) provides a gravitational reaction force to the primary lure body (106) to prevent the primary lure body (106) from rotating in a body of water.

8. The fishing lure (100) of any one of claims 1 to 7, wherein
the sound structure (110) is mounted to a propeller tail (104), and
the propeller tail (104) is rotatably supported by the wire form (116), preferably wherein
the sound structure (110) is fixed to the propeller tail (104) such that the sound structure
(110) and the propeller tail (104) are co-rotatable about the wire form (116).

9. The fishing lure (100) of claim 8, wherein the sound structure (110) is mounted in a sound resonance housing (114) of the propeller tail (104), preferably wherein a blade (108) extends radially outwardly from the sound resonance housing (114), and preferably wherein the propeller tail (104) includes a removable core pin (164).

10. The fishing lure (100) of claim 8 or 9, wherein the sound structure (110) extends axially outwardly beyond the propeller tail (104).

11. The fishing lure (100) of any one of claims 1 to 10, wherein the sound structure (110) is axially slidable along the wire form (116).

12. A fishing lure (100), comprising:
a wire form (116) anchored to a primary lure body (106);
a rivet (112) anchored to the wire form (116); and
a sound structure (110) rotatably supported along the wire form (116) between the primary lure body (106) and the rivet (112), the sound structure (110) being configured to generate sound when rotatably engaging the rivet (112).

13. The fishing lure (100) of claim 12, wherein
the rivet (312) has one or more of a contoured engagement surface (170) and a serrated circumferential edge (384), and
the sound structure contacts (110) one or more of the contoured engagement surface (107)
and the serrated circumferential edge (384) to generate sound, preferably wherein the sound structure (110) is mounted in a propeller tail (104).

14. A fishing lure (100), comprising:
a sound generating assembly (102) including a sound structure (110) and a rivet (112), the sound structure (110) being rotatable relative to the rivet (112) to generate sound;
a wire form (116) extending through the sound structure (110) and the rivet (112); and
a primary lure body (106) connected to the wire form (116).

15. The fishing lure (100) of claim 14, wherein the sound structure (110) is mounted in a propeller tail (104).
